# EUROPÄISCHE PATENTSCHRIFT

(11) **EP 3 429 765 B1**
(45) Veröffentlichungstag und Bekanntmachung des Hinweises auf die Patenterteilung: **13.04.2022**
(21) Anmeldenummer: 17703123.4
(22) Anmeldetag: 02.02.2017
(51) Int. Cl.: B07B 1/46, B07B 13/16, B29C 64/35, B29C 64/153, B33Y 30/00

(54) **VORRICHTUNG ZUR GENERATIVEN HERSTELLUNG VON BAUTEILEN**
DEVICE FOR THE GENERATIVE MANUFACTURING OF COMPONENTS
DISPOSITIF POUR LA FABRICATION GÉNÉRATIVE DE COMPOSANTS

(30) Priorität: 18.03.2016 DE 102016105094
(43) Veröffentlichungstag der Anmeldung: 23.01.2019
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); SCHÖDEL, Frank, 96317 Kronach (DE)
(74) Vertreter: Hafner & Kohl PartmbB
(86) Internationale Anmeldenummer: PCT/EP2017/052274
(87) Internationale Veröffentlichungsnummer: WO 2017/157567

(56) Entgegenhaltungen:
- EP-A1- 1 316 408
- WO-A1-94/26427
- AT-B- 2 993
- DE-A1- 19 937 260
- DE-A1-102011 002 954
- FR-A- 1 021 825
- GB-A- 1 269 423
- US-A- 3 929 647
- US-A- 4 855 039

## Beschreibung

Die Offenbarung betrifft eine Siebeinrichtung zum Einsatz in einer Vorrichtung zur generativen Herstellung von Bauteilen durch aufeinanderfolgendes Verfestigen von Schichten aus pulverartigem Baumaterial. Bei derartigen generativen Bauvorrichtungen wird pulverartiges Baumaterial schichtweise auf eine Unterlage aufgetragen, die Schichten werden durch Strahlung, insbesondere Laserstrahlung bereichsweise an- oder aufgeschmolzen und dadurch zu einem festen Körper verbunden. Bekannte generative Bauvorrichtungen umfassen eine Beschichtungseinrichtung zum Auftrag der Pulverschichten auf den Träger, eine Dosiereinrichtung zur Bereitstellung des Baumaterials für den Beschichter, einen Überlaufbehälter zur Aufnahme von Baumaterial, das beim Beschichtungsvorgang nicht benötigt wird und eine Siebeinrichtung zur Siebung des während des Bauprozesses in den Überlaufbehälter abgeführten Baumaterials zuführbar ist. Bekannte Siebvorrichtungen, die bisher in generativen Bauvorrichtungen eingesetzt werden, sind eben ausgebildet, d. h. die Siebfläche ist entweder horizontal ausgerichtet oder allenfalls leicht geneigt, sodass das zu siebende Gut mit einer gleichmäßigen Geschwindigkeit über das Sieb geführt wird, sofern das Sieb z. B. durch einen oszillierenden Antrieb bewegt wird. Wird der Siebvorgang während des Bauprozesses durchgeführt, dann wird das Sieb durch eine Parametrisierung so eingestellt, dass das Baumaterialpulver in einer geforderten Zeit gesiebt wird. Dies geht zu Lasten der Siebqualität, da ein großer Anteil des Gutkorns in den Überkornbehälter geführt wird. Dieser Überkornanteil muss dann während der Rüstzeiten der Vorrichtung erneut gesiebt werden, zum Teil auch mehrmals, was zum einen umständlich ist und zum anderen die Rüstzeiten verlängert. Insgesamt wird nach dem Stand der Technik das Siebgut mit einer gleichmäßigen Geschwindigkeit über die Sieboberfläche geführt.

Das Dokument DE 10 2011 002954 A1 offenbart eine Vorrichtung zur generativen Herstellung von Bauteilen gemäß dem Oberbegriff des Anspruchs 1.

Der Erfindung liegt die Aufgabe zugrunde, eine Vorrichtung zur generativen Herstellung von Bauteilen mit einer Siebeinrichtung anzugeben, die mit besonderem Vorteil in generativen Bauvorrichtungen eingesetzt werden kann und durch die der gesamte Bauvorgang beschleunigt wird, insbesondere aber auch die Nachrüstintervalle zeitlich reduziert werden können. Diese Aufgabe wird dadurch gelöst, dass ein Sieb der Siebeinrichtung zumindest abschnittsweise derart geneigt ausgebildet ist, dass das zu siebende Pulvermaterial nach Auftreffen auf das Sieb zunächst mit einer Anfangsgeschwindigkeit über die Oberfläche des Siebes geführt wird und danach die Transportgeschwindigkeit des Pulvermaterials über die Sieboberfläche abnimmt oder auf einen niedrigeren Geschwindigkeitswert reduziert ist.

Mit Vorteil wird dies erreicht, wenn das Sieb insbesondere in Transportrichtung des Pulvermaterials über das Sieb, d. h. in Sieblängsrichtung, gekrümmt ist. Insbesondere wird auch angestrebt, dass die Oberfläche des Siebes im Bereich einer Pulverzuführöffnung eine größere Neigung aufweist, als in einem Pulverabführbereich des Siebes. Der Pulverabführbereich ist der Bereich, in dem das Überkorn von der Pulveroberfläche abgeführt wird.

Hinsichtlich der Krümmung in Transportrichtung des Pulvermaterials gibt es unterschiedliche Möglichkeiten. Das Sieb kann entweder eine gleichmäßige Krümmung aufweisen, es kann aber auch aus mehreren z. B. winkelig aneinander angrenzenden Siebabschnitten bestehen, oder solche Siebabschnitte aufweisen. Jeder Siebabschnitt kann entweder für sich eben ausgebildet sein oder mit einer jeweils eigenen Krümmung ausgestattet sein. Zusätzlich zur Krümmung in Transport- oder Längsrichtung des Siebes kann vorgesehen sein, dass die Längsseitenränder des Siebes oder der Siebabschnitte seitlich hochgezogen sind. Die Siebabschnitte können z. B. auch gelenkig miteinander verbunden sein, sodass eine sehr flexible Einstellung der Gesamtkrümmung des Siebes oder der Siebeinrichtung möglich ist. Dabei ist es mit Vorteil denkbar, dass das Sieb oder die Siebabschnitte einzeln zueinander eingestellt werden und justiert werden. Die Siebabschnitte müssen auch nicht notwendigerweise gelenkig oder auf sonstige Weise aneinander befestigt sein, sie können auch als Einzelabschnitte ausgebildet sein, wobei sich die Siebabschnittsbereiche so überlappen, dass das Überkorn von einem Siebabschnitt zum anderen geführt wird. Hinsichtlich der Einstellung der Siebabschnitte liegt es im Rahmen der Erfindung, dass zunächst ein steiler Siebabschnitt vorgesehen ist, auf den aus der Pulverzuführöffnung das zu siebende Pulvermaterial austritt, dann folgt ein flacherer Siebabschnitt, dann kann wieder ein steilerer Siebabschnitt folgen usw. Nicht notwendigerweise muss die Neigung der Siebabschnitte zu einer ebenen Fläche gleichmäßig abnehmen. Das Sieb oder die Siebabschnitte können gemeinsam oder einzeln oder auch gesondert für sich mit einem oszillierenden Antrieb versehen sein, unterschiedliche Oszillationen einzelner Siebabschnitte können damit verursacht und eingestellt werden.

Die Erfindung betrifft eine Vorrichtung zur generativen Herstellung von Bauteilen mit den Merkmalen des Anspruchs 1.

Die Erfindung ist anhand von Ausführungsbeispielen in den Zeichnungsfiguren näher erläutert. Diese zeigen:
- Fig. 1: eine Siebeinrichtung nach dem Stand der Technik,
- Fig. 2: eine Siebeinrichtung der erfindungsgemäßen
- Vorrichtung: zur generativen Herstellung von Bauteilen mit einem durchgehenden, in Transportrichtung des Pulvermaterials gleichmäßig gekrümmten Sieb,
- Fig. 3: eine Siebeinrichtung mit mehreren ebenen Siebabschnitten, die über Gelenkelemente miteinander verbunden sind,
- Fig. 4: eine Siebeinrichtung bestehend aus einer Mehrzahl von sich überlappenden Siebabschnitten,
- Fig. 5: eine Darstellung gemäß Fig. 4, wobei die Siebabschnitte im Mittelbereich des Siebes eine Stufe bilden,
- Fig. 6: eine Siebeinrichtung mit mehreren überlappenden Siebabschnitten, die jeweils eine Krümmung aufweisen,
- Fig. 7: eine Daraufsicht in Pulvertransportrichtung, auf eine Siebabschnitt, wobei der Siebabschnitt seitlich hochgezogene Ränder aufweist,
- Fig. 8: eine schematische Darstellung einer Vorrichtung zur generativen Herstellung von Bauteilen, in die eine Siebeinrichtung gemäß Fig. 2 integriert ist.
Zunächst wird auf Zeichnungsfigur 8 Bezug genommen.

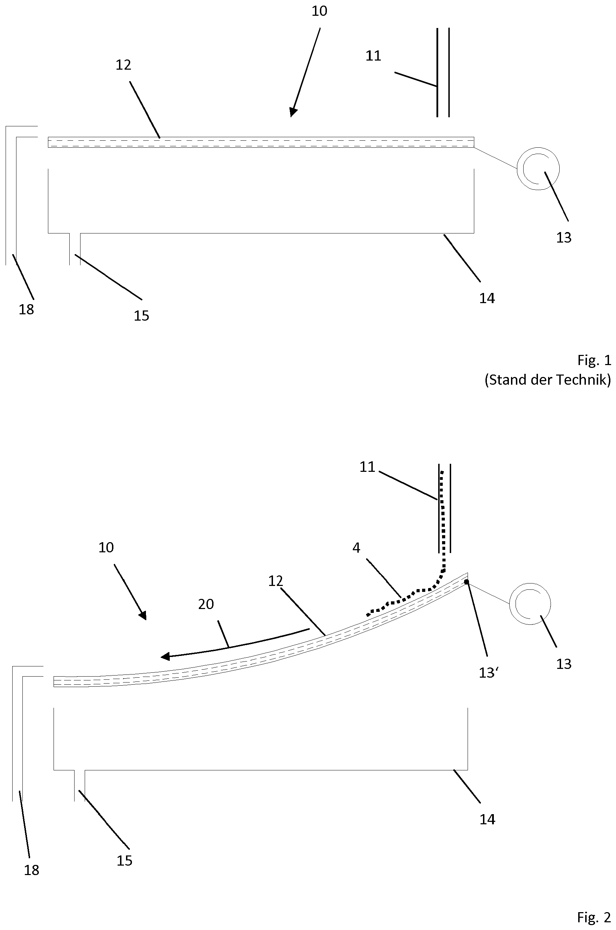

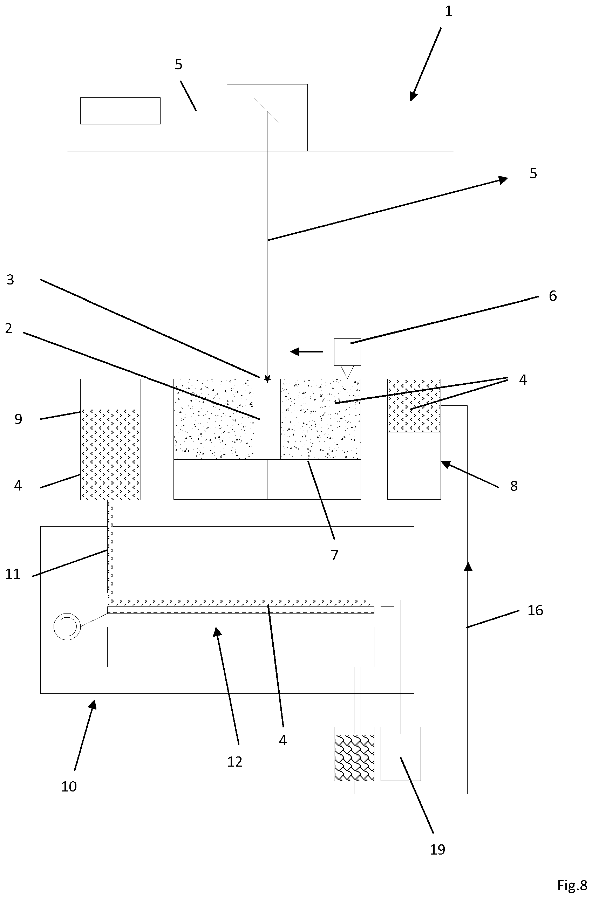

In Fig. 8 ist schematisch eine Vorrichtung 1, zur Herstellung von Bauteilen 2 durch aufeinanderfolgendes Verfestigen einzelner Schichten 3 aus pulverartigem verfestigbarem Baumaterial 4 dargestellt, wobei das Baumaterial 4 durch Laserstrahlung 5 an - oder aufgeschmolzen wird und sich nach Abkühlung zu einem festen Bauteil verbindet. Eine derartige Vorrichtung 1 umfasst eine Beschichtungseinrichtung 6 zum Auftrag der Pulverschichten 3 auf einen vorzugsweise höhenverstellbaren Träger 7, eine Dosiereinrichtung 8 zur Bereitstellung des Baumaterials 4 für die Beschichtungseinrichtung, einen Überlaufbehälter 9 zur Aufnahme von beim Beschichtungsvorgang nicht benötigtem Baumaterial 4 sowie eine Siebeinrichtung 10, die beim Stand der Technik gemäß Fig. 1 ausgebildet ist, nach der Erfindung aber z. B. Merkmale aufweist, die in den Zeichnungsfiguren 2 - 7 dargestellt sind. Beim Stand der Technik umfasst die Siebeinrichtung 10 eine Pulverzuführöffnung 11, mit der aus dem Überlaufbehälter 9 stammendes überschüssiges Baumaterial 4 dem Siebvorgang zugeführt wird. Das Siebgut bestehend aus Körnern unterschiedlicher Größe fällt auf ein Sieb 12 der Siebvorrichtung 10, wobei das Sieb 12 so ausgebildet ist, dass das Siebgut mit gleichmäßiger konstanter Geschwindigkeit über das Siebgewebe befördert wird. Hierzu ist ein oszillierender Antrieb 13 vorgesehen, der das Sieb 12 in Bewegung versetzt, sodass das Siebgut über die Oberfläche des Siebes 12 befördert wird. Unter dem Sieb 12 bzw. Siebgewebe ist ein Gutkorn-Behälter 14 angeordnet, der eine Abführöffnung 15 aufweist, die unmittelbar oder mittelbar mit einem Behälter der Dosiereinrichtung 8 in Verbindung gebracht werden kann, was durch eine Pulverleitung 16 angedeutet ist. Es liegt aber auch im Rahmen der Erfindung, einen gesonderten Behälter unter der Gutkorn-Abführöffnung 15 vorzusehen, der dann als Dosierbehälter in die Dosiereinrichtung 8 eingesetzt werden kann.

Das Überkorn, d. h. Pulverteile, die die Maschen des Siebes 12 nicht durchsetzen können, wird zu einem Pulverabführbereich 18 am Siebende geführt und dort in einem Überkornbehälter 19 gesammelt.

Nach der Erfindung ist es nun vorgesehen, das Sieb 12 der Siebeinrichtung 10 gemäß den Fig. 2 - 7 auszubilden. Z. B. kann das Sieb 12 in Transportrichtung 20 gekrümmt sein, wodurch das zu siebende Baumaterial 4 nach Auftreffen auf das Sieb 12 zunächst mit einer Anfangsgeschwindigkeit über die Oberfläche des Siebes 12 geführt wird und danach die Transportgeschwindigkeit des Baumaterials 4 über die Oberfläche des Siebes 12 abnimmt oder auf einen niedrigeren Geschwindigkeitswert reduziert ist. Dies kann bspw. dadurch erreicht werden, dass das Sieb 12 in Transportrichtung 20 gekrümmt ist, wie dies in Fig. 2 dargestellt ist. Die Oberfläche des Siebes 12 wird im Bereich der Pulverzuführöffnung 11 eine größere Neigung aufweisen als im Pulverabführbereich 18 des Siebes 12.

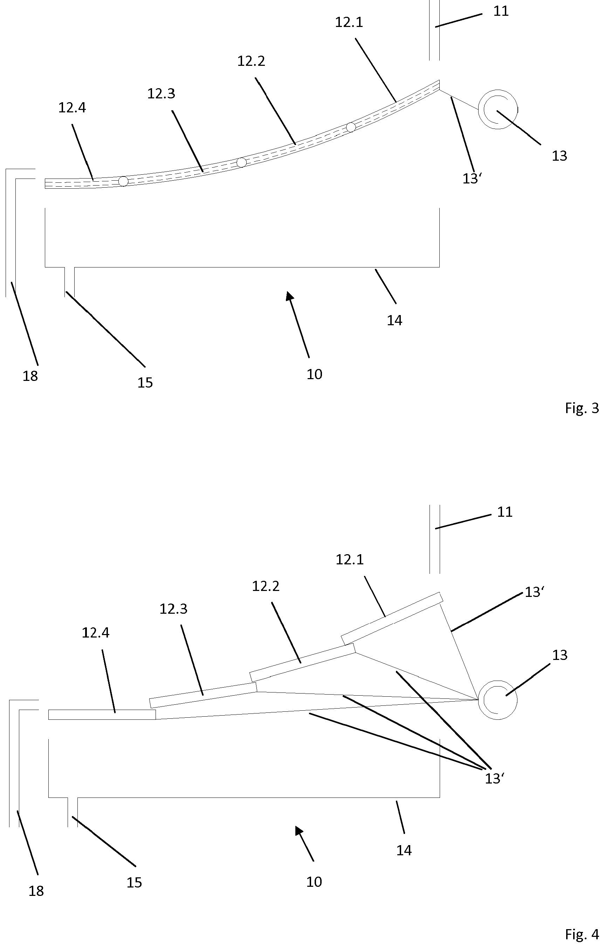

Wie in Fig. 2 dargestellt, kann das Sieb 12 eine gleichmäßige Krümmung aufweisen, es ist aber auch möglich, das Sieb 12 aus mehreren insbesondere winkelig oder gelenkig aneinander angrenzenden Siebabschnitten 12.1 - 12.4 bestehen zu lassen, wie dies in den Zeichnungen 3 - 6 dargestellt ist. Bei dem in Fig. 3 dargestellten Ausführungsbeispielen besteht das Sieb 12 aus einer Kette von vier Siebabschnitten 12.1 - 12.4, wobei jeder Siebabschnitt bspw. eine ebene Ausbildung aufweist. Der Siebabschnitt 12.1 ist steiler angeordnet, als die jeweilig nachfolgenden Siebabschnitte 12.2, 12.3 und 12.4. Bei dem in Fig. 4 dargestellten Ausführungsbeispiel sind ebenfalls vier Siebabschnitte 12.1 - 12.4 vorgesehen, die sich mit ihren in Transportrichtung 20 weisenden Endkanten 21 überlappen, sodass das zu siebende Baumaterial 4 sicher auf den nächsten Siebabschnitt 12.2, 12.3 und 12.4 gebracht wird.

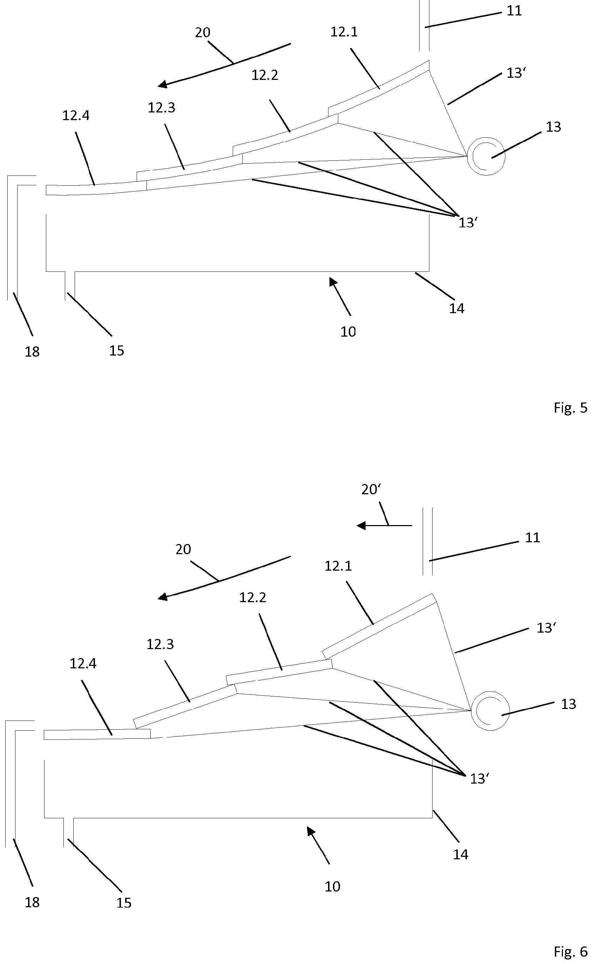

Bei dem in Fig. 6 dargestellten Ausführungsbeispiel ist in einem Bereich des Siebes 12 gleichsam eine Stufe vorgesehen, weil der Siebabschnitt 12.2 eine geringere Neigung aufweist, als der in Transportrichtung 20 nachfolgende Siebabschnitt 12.3.

Eine derartige Stufe kann natürlich auch bei der Ausführungsform gemäß Fig. 3 oder Fig. 6 eingestellt werden, das Vorsehen einzelner Siebabschnitte 12.1 - 12.4 (in Fig. 5) ermöglicht unterschiedliche Neigungseinstellungen der Siebabschnitte. In Fig. 6 sind ebenfalls sich mit ihren Unterkanten 21 überlappende Siebabschnitte vorgesehen, wobei die Siebabschnitte 12.1 - 12.4 jeweils in sich eine Krümmung in Transportrichtung 20 aufweisen.

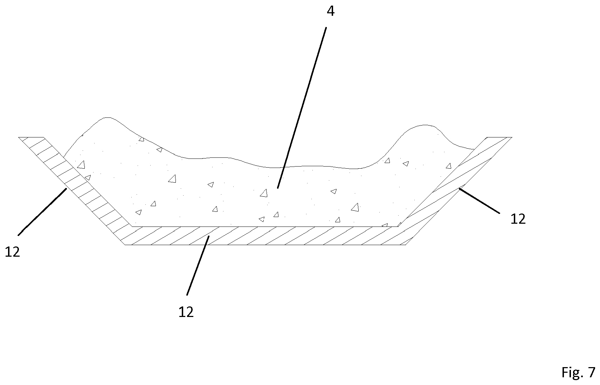

In Fig. 7 ist noch dargestellt, dass jeder Siebabschnitt 12.1 - 12.5 seitlich hochgezogene Kanten aufweist, sodass das zu siebende Baumaterial 4 gleichsam in einer Rinne gefördert wird.

In den Zeichnungsfiguren ist noch ein oszillierender Antrieb 13 angedeutet, der so ausgestaltet ist, dass er über Antriebselemente 13' des Siebes 12 oder die einzelnen Siebabschnitte 12.1 - 12.4 oszillierend in Bewegung setzen kann.

### BEZUGSZEICHENLISTE

- 1.: Vorrichtung
- 2.: Bauteil
- 3.: Schichten
- 4.: Baumaterial
- 5.: Laserstrahlung
- 6.: Beschichtungseinrichtung
- 7.: Träger
- 8.: Dosiereinrichtung
- 9.: Überlaufbehälter
- 10.: Siebeinrichtung
- 11.: Pulverzuführöffnung
- 12.: Sieb
- 13.: Oszillierender Antrieb
- 13'.: Antriebselemente
- 14.: Gutkorn-Behälter
- 15.: Gutkorn-Abführöffnung
- 16.: Pulverleitung

- 17.: Pulverabführbereich
- 18.: Überkornbehälter
- 19.: Transportrichtung
- 20'.: Längsrichtung
- 20.: Endkanten / Unterkanten

## Patentansprüche

1. Vorrichtung (1) zur generativen Herstellung von Bauteilen (2) durch aufeinanderfolgende Verfestigung einzelner Schichten (3) aus pulverartigem verfestigbarem Baumaterial (4) durch Einwirkung einer Strahlung, insbesondere Laserstrahlung (5), durch bereichsweises an - oder Aufschmelzen und Verbinden des Baumaterials (4), mit einer Siebeinrichtung (10), umfassend eine Beschichtungseinrichtung (6) zum Auftrag der Schichten (3) auf einen Träger (7), eine Dosiereinrichtung (8) zur Bereitstellung des pulverartigen Baumaterials (4) für die Beschichtungseinrichtung (6), einen Überlaufbehälter (9) zur Aufnahme von beim Beschichtungsvorgang nicht benötigtem Baumaterial (4), das der Siebeinrichtung (10) zur Siebung des während des Bauprozesses in den Überlaufbehälter (9) abgeführten Pulvermaterials zuführbar ist, **dadurch gekennzeichnet, dass** ein Sieb (12) der Siebeinrichtung (10) zumindest abschnittsweise derart geneigt ausgebildet ist, dass das zu siebende Baumaterial (4) nach Auftreffen auf das Sieb (12) zunächst mit einer Anfangsgeschwindigkeit über die Oberfläche des Siebes (12) geführt wird und danach die Transportgeschwindigkeit des Baumaterials (4) über die Sieboberfläche abnimmt oder auf einen niedrigeren Geschwindigkeitswert reduziert ist.

2. Vorrichtung (1) nach Anspruch 1 **dadurch gekennzeichnet, dass** das Sieb (12) in Transportrichtung (20) des Baumaterials (4) auf der Sieboberfläche gekrümmt ist.

3. Vorrichtung (1) nach Anspruch 1 oder 2, **dadurch gekennzeichnet, dass** die Oberfläche des Siebes (12) im Bereich einer Pulverzuführöffnung (11) eine größere Neigung aufweist, als in einem Pulver-Abführbereich (18) des Siebes (12).

4. Vorrichtung (1) nach Anspruch 2, **dadurch gekennzeichnet, dass** das Sieb (12) eine gleichmäßige Krümmung aufweist

5. Vorrichtung (1) nach einem der vorhergehenden Ansprüche, **dadurch gekennzeichnet, dass** das Sieb (12) aus mehreren insbesondere winkelig oder gelenkig aneinander angrenzenden Siebabschnitten (12.1 - 12.4) besteht oder solche Siebabschnitte umfasst.

6. Vorrichtung (1) nach Anspruch 5, **dadurch gekennzeichnet, dass** die Siebabschnitte (12.1 - 12.4) jeweils für sich eben oder mit einer jeweils eigenen Krümmung ausgebildet sind.

7. Vorrichtung (1) nach einem der vorhergehenden Ansprüche, **dadurch gekennzeichnet, dass** die Längsseitenränder des Siebes oder der Siebabschnitte (12.1 - 12.4) seitlich hochgezogen sind.

8. Vorrichtung (1) nach einem der vorhergehenden Ansprüche, **dadurch gekennzeichnet, dass** das Sieb (12) oder die Siebabschnitte (12.1 - 12.4) in ihrer Neigung verstellbar sind.

9. Vorrichtung (1) nach einem der vorhergehenden Ansprüche, **dadurch gekennzeichnet, dass** die Pulverzuführöffnung (11) in Längsrichtung (20') des Siebes (12) oder der Siebabschnitte (12.1 - 12.4) verstellbar angeordnet ist.

10. Vorrichtung (1) nach Anspruch 5, **dadurch gekennzeichnet, dass** der Winkel zwischen den Siebabschnitten (12.1 - 12.4) verstellbar ist.

11. Vorrichtung (1) nach einem der vorhergehenden Ansprüche, **dadurch gekennzeichnet, dass** das Sieb (12) oder die Siebabschnitte (12.1 - 12.4) gemeinsam oder einzeln oder gesondert für sich mit einem oszillierenden Antrieb (13) versehen sind.

12. Vorrichtung (1) nach einem der vorhergehenden Ansprüche, **dadurch gekennzeichnet, dass** unter dem Sieb (12) oder den Siebabschnitten (12.1 - 12.4) wenigstens ein Gutkorn-Behälter (14) angeordnet ist, dessen Auslass mit einem Dosierbehälter oder einem Vorratsbehälter der Vorrichtung (1) verbunden oder verbindbar ist.

## Claims

1. Apparatus (1) for the generative manufacturing of components (2) by consecutive solidification of single layers (3) of powdery compactable building material (4) with exposure to radiation, in particular by a laser beam (5) by means of sectional fusion or melting on and combining the building material (4) with a screen device (10), comprising a
coating device (6) for applying layers (3) on a carrier (7), a dosing device (8) for supplying the powdery building material (4) for the coating device (6), an overflow tank (9) for the collection
of building material (4) that is not needed in the coating process and which can be added for screening the powder material, which is led off from the screen device (10) into the overflow tank (9) during the building process, **characterized in that** a screen (12) of the screen device (10) is embodied at least tilted in sections in such a manner that the building material (4) to be screened is led over the surface of the screen (12) initially with a starting speed, then adopting the transport speed of the building material (4) over the screen surface or being reduced to a lower speed value.

2. Apparatus (1) according to claim 1 **characterized in that** the screen (12) is bent in the transport direction (20) of the building material (4) on the screen surface.

3. Apparatus (1) according to claim 1 or claim 2, **characterized in that** the surface of the screen (12) has a steeper slant in the area of the powder inlet than that in a powder outlet area (18) of the screen (12).

4. Apparatus (1) according to claim 2, **characterized in that** the screen (12) has an even bend.

5. Apparatus (1) according one of the foregoing claims, **characterized in that** the screen (12) consists of or includes several screen sections (12.1 to 12.4), which are arranged next to each other in particular angled or jointed.

6. Apparatus (1) according to claim 5, **characterized in that** each of the screen sections (12.1 to 12.4) is designed evenly for itself with its own bend, respectively.

7. Apparatus (1) according to one of the foregoing claims, **characterized in that** the lengthwise side edges of the screen or screen sections (12.1 to 12.4) are slanted laterally.

8. Apparatus (1) according to one of the foregoing claims, **characterized in that** the screen (12) or screen sections (12.1 to 12.4) are adjustable in their slants.

9. Apparatus (1) according to one of the foregoing claims, **characterized in that** the powder inlet opening (11) is arranged to be adjustable in the lengthwise direction (20') of the screen (12) or screen sections (12.1 to 12.4).

10. Apparatus (1) according to claim 5, **characterized in that** the angle between the screen sections (12.1 to 12.4) is adjustable.

11. Apparatus (1) according to one of the foregoing claims, **characterized in that** the screen (12) or the screen sections (12.1 to 12.4) are jointly or each for itself provided with an oscillating drive (13).

12. Apparatus (1) according to one of the foregoing claims, **characterized in that** under the screen (12) or the screen sections (12.1 to 12.4) at least one good grain container (14) is arranged, the outlet of which is or can be connected to a dosing tank or storage tank of the apparatus (1).

## Revendications

1. Dispositif (1) de fabrication générative de pièces de construction (2) par solidification successive couche par couche de couches unitaires (3) constituées d'un matériau de construction (4) en poudre solidifiable par action d'un rayonnement, en particulier d'un rayon laser (5) par liquéfaction ou fusion localisée et liaison du matériau de construction (4) avec un dispositif de tamisage (10), comprenant
un dispositif de recouvrement (6) destiné à appliquer le couches (3) sur un support (7), un dispositif de dosage (8) pour préparer le matériau de construction en poudre (4) pour le dispositif de recouvrement (6), un collecteur (9) destiné à réceptionner le matériau de construction (4) non nécessaire au processus de recouvrement, qui peut être reconduit au dispositif de tamisage (10) en vue du tamisage du matériau en poudre évacué dans le collecteur (9) pendant le procédé de construction, **caractérisé en ce qu'**un tamis (12) du dispositif de tamisage (10) est conçu incliné au moins localement, de sorte que le matériau de construction (4) à tamiser est conduit après impact sur le tamis (12) d'abord avec une vitesse initiale sur la surface du tamis (12) et ensuite la vitesse de transport du matériau de construction (4) sur la surface de tamisage diminue ou est réduit à une valeur de vitesse inférieure.

2. Dispositif (1) selon la revendication 1 **caractérisé en ce que** le tamis (12) est incurvé dans la direction de transport (20) du matériau de construction (4) sur la surface de tamisage.

3. Dispositif (1) selon la revendication 1 ou 2 **caractérisé en ce que** la surface du tamis (12) présente dans la zone d'une ouverture d'acheminement de poudre (11) une plus grande inclinaison que dans une zone d'évacuation de la poudre (18) du tamis (12).

4. Dispositif (1) selon la revendication 2 **caractérisé en ce que** le tamis (12) présente une courbure régulière.

5. Dispositif (1) selon l'une des revendications précédentes, **caractérisé en ce que** le tamis (12) se compose de plusieurs sections de tamis (12.1 - 12.4) juxtaposées de façon souple ou articulée ou comprend de telles sections de tamis.

6. Dispositif (1) selon la revendication 5, **caractérisé en ce que** les sections de tamis (12.1 - 12.4) sont constituées respectivement horizontales ou avec une inclinaison qui leur est propre.

7. Dispositif (1) selon l'une des revendications précédentes, **caractérisé en ce que** les bords latéraux longitudinaux du tamis ou des sections de tamis (12.1 - 12.4) sont relevés latéralement.

8. Dispositif (1) selon l'une des revendications précédentes, **caractérisé en ce que** le tamis (12) ou les sections de tamis (12.1 - 12.4) sont réglables en inclinaison.

9. Dispositif (1) selon l'une des revendications précédentes, **caractérisé en ce que** l'ouverture d'acheminement de poudre (11) est disposée réglable dans le sens de la longueur (20') du tamis (12) ou des sections de tamis (12.1 - 12.4).

10. Dispositif (1) selon la revendication 5 **caractérisé en ce que** l'angle entre les sections de tamis (12.1 - 12.4) est réglable.

11. Dispositif (1) selon l'une des revendications précédentes, **caractérisé en ce que** le tamis (12) ou les sections de tamis (12.1 - 12.4) sont munis ensemble ou individuellement ou séparément d'un entraînement oscillant (13).

12. Dispositif (1) selon l'une des revendications précédentes, **caractérisé en ce que** sous le tamis (12) ou les sections de tamis (12.1 - 12.4) est disposé au moins un récipient à fraction désirée (14) dont la sortie est ou peut être liée à un récipient doseur ou à un réservoir de stockage du dispositif (1).
